# EUROPEAN PATENT APPLICATION

(11) **EP 3 392 560 A1**
(43) Date of publication of application: **24.10.2018**
(21) Application number: 16876066.8
(22) Date of filing: 16.12.2016
(51) Int. Cl.: F21V 21/116, F21S 8/08, F21V 21/08, F21V 33/00, F21V 17/10, F21V 27/02, F21V 29/70, F21V 7/04, F21Y 101/00, F21W 111/02

(54) **MULTIFUNCTION LED STREET LIGHT DEVICE FOR STABILITY OF INSTALLATION**

(30) Priority: 18.12.2015 KR 20150182217
(71) Applicant: Gigatera Inc., Gyeonggi-do 18487 (KR)
(72) Inventor: KIM, Dukyong, Yongin-si Gyeonggi-do 17086 (KR)
(74) Representative: RatnerPrestia
(86) International application number: PCT/KR2016/014790
(87) International publication number: WO 2017/105124

(57) **Abstract**

The present disclosure relates to a multifunction LED streetlight device considering installation stability, and includes a base unit fixedly installed to an arm coupled to an upper end of a pillar; and a lighting unit detachably coupled to the base unit, and for adjusting light distribution in order to provide legal light distribution on a road even when the arm is provided by the length required for the coupling with the base unit. The present disclosure can adjust the light distribution of the lighting unit to install while using a part of the arm installed on the existing streetlight as it is without replacing the arm even when the weight of a luminaire increases, thus saving the cost and performing more stable installation.

## Description

### [Technical Field]

The present disclosure relates to a multifunction LED streetlight device considering installation stability, and more particularly, to a multifunction LED streetlight device considering installation stability, which can use the existing streetlight installation pole as it is even when the weight thereof increases by adding an additional function, such as a camera and a base station device for mobile communication in addition to a lighting unit.

### [Background Art]

In general, LEDs have a longer lifetime and lower power consumption than the existing lighting, and recently, a product that can replace the existing lighting, such as a streetlight and an interior light, has been developed.

Streetlight devices using LEDs include a heat-dissipation means, a constant power supply device, etc., which are usually heavier than the existing streetlight device, and the weight thereof further increases when a camera, etc. are attached thereto.

As described above, when the weight increases, the arm that is extended from the pole of the streetlight to fix a streetlight luminaire can exceed the weight of the design range that can safely maintain, and in this time, has to be replaced with a harder arm.

There has been a problem in that the streetlight is installed on both sides of the road at a predetermined interval and the number of the streetlights is very large, such that it is very expensive to replace the arms.

Another method of solving the problem caused by the increase in the weight of the LED streetlight device can greatly shorten the arm to stably support even when the weight of the luminaire increases, but there expects a problem in that the light distribution of the LED streetlight device fixed to a short arm does not reach the road, thus not using it.

Apart from the problem of the streetlight itself, the mobile communication base station device has recently been downsized, and the installation site is not limited to the roof of the existing building but can be directly installed on the streetlight.

For example, the methods have been proposed that install the antenna of the base station on the upper portion of the streetlight pillar (pole) and installs a part of the base station device in the streetlight, or attach and install it to the outside of the streetlight, as in Japanese Utility Model Registration No. 3187291 (registered on October 30, 2013, a mobile station (base station) of a portable terminal).

However, there has been a problem in that when the base station device is installed in the streetlight pillar, the streetlight pillar has to be replaced due to the size of the base station device, and even when it is attached and installed to the outside thereof, since a wiring work has to be performed again for each streetlight in order to distribute the power supplied to the streetlight to supply it to the base station device, the installation cost is very high and the work is inconvenient.

### [Disclosure]

### [Technical Problem]

An object of the present disclosure for solving the above problems is to provide a multifunction LED streetlight device considering installation stability, which can apply without replacing the arm even when the weight of the luminaire using LED increases.

In addition, another object of the present disclosure is to provide a multifunction LED streetlight device considering installation stability, which can add or separate functional elements if necessary.

In addition, yet another object of the present disclosure is to provide a multifunction LED streetlight device considering installation stability, which can install the mobile communication base station without deforming or processing the streetlight pillar.

In addition, still yet another object of the present disclosure is to provide a multifunction LED streetlight device, which can secure the stability in installing the mobile communication base station.

### [Technical Solution]

A multifunction LED streetlight device capable of obtaining installation stability in accordance with the present disclosure for solving the above problems can include a base unit 100 fixedly installed to an arm 2 coupled to an upper end of a pillar 1; and a lighting unit 200 detachably coupled to the base unit 100, and for adjusting light distribution in order to provide legal light distribution on a road even when the arm 2 is provided by the length required for the coupling with the base unit 100.

A means to which a camera unit 400 can be coupled is provided on the bottom surface of the base unit 100.

A means to which a base station device unit 300 can be coupled is provided on the side surface of the base unit 100.

A means to which a base station device unit 500 can be coupled is provided on the rear surface of the base unit 100.

The base station device unit 500 can include a housing 510 for receiving circuits required for an operation of a base station; and a plurality of antennas 520 protruded from the housing 510.

The housing 510 can further include an installation groove 530 vertically penetrated in order not to interfere the pillar 1 when connected to the rear end of the base unit 100.

The multifunction LED streetlight device considering installation stability can further include a structure for covering the upper portion of the installation groove 530, and contacting the upper end of the pillar 1.

The base unit 100 can be rotatably coupled to the arm 2.

The base unit 100 can be connected with a power line provided through the inside of the pillar 1 to supply power to units coupled to the base unit 100.

The base unit 100 can be coupled by a coupling means in order to be rotatably coupled to the arm 2, and the coupling means can provide a connection space that can connect the power line provided through the inside of the pillar 1.

The lighting unit 200 can include a case part for forming a light outlet and having a plurality of seating surfaces on a part of the inner surface thereof; a plurality of substrates seated in the plurality of seating surfaces, respectively, and mounting a plurality of LEDs, respectively; a plurality of heat-dissipation parts provided on the outer surface of the case part that is the outside portion corresponding to the seating surface located on the inner surface of the case part to dissipate heat of the plurality of substrates, respectively; and a reflection part inserted and installed into the case part to reflect light emitted from the LED mounted on the plurality of substrates to emit it through the light outlet, and for providing light distribution suitable for the lighting of the road even when coupled to the arm 2.

The reflection part can include a plurality of curved reflection parts for providing a convex curve surface on the upside of the light outlet, reflect the light from the plurality of LEDs on each of the plurality of curved reflection parts, and provide the light distribution by a curvature of the curved reflection part.

The plurality of curved reflection parts can include a first curved reflection part and a second curved reflection part for reflecting the LED light of the substrate in order to be located to correspond to the plurality of substrates, respectively, and the reflection part can further include a division part interposed between the first curved reflection part and the second curved reflection part to divide so that the light reflected from the first curved reflection part is not entered to the second curved reflection part.

The multifunction LED streetlight device considering installation stability can further include a warning display unit additionally installed to the lighting unit to emit the light toward the opposite to the traveling direction of a vehicle; and a control unit communicatively connected with the lighting unit, the warning display unit, and the camera unit to receive the video photographed by the camera unit, and for controlling the lighting unit and the warning display unit.

### [Advantageous Effects]

The multifunction LED streetlight device considering installation stability in accordance with the present disclosure can adjust the light distribution of the lighting unit to install while using a part of the arm installed on the existing streetlight as it is without replacing the arm even when the weight of the luminaire increases, thus reducing costs and making more stable installation.

In addition, the present disclosure has a base unit fixed to the arm; can selectively couple a luminaire unit, a camera, and a base station device unit to the base unit, thus selectively adding the function suitable for the location of the corresponding streetlight; and can easily replace only the portion where the failure has occurred, thus easily performing the maintenance.

In addition, the present disclosure can locate the center of gravity of the base station device unit on the center of the streetlight pillar, thus performing more stable support when coupling the base station device unit.

In addition, the present disclosure can control the lighting unit and the warning display unit based on the video photographed by the camera unit to visually provide information to the driver depending upon the current traffic situation, thus greatly increasing the convenience of the driver.

### [Description of Drawings]

FIG. 1 is a perspective diagram of a multifunction LED streetlight device considering stability in accordance with a preferred embodiment of the present disclosure.
FIG. 2 is an exploded perspective diagram of FIG. 1.
FIG. 3 is an exploded perspective diagram of a lighting unit applicable to the present disclosure.
FIG. 4 is a cross-sectional diagram of the coupled state in FIG. 3.
FIG. 5 is a detailed configuration diagram of the casing unit in FIG. 3.
FIG. 6 is a configuration diagram of the coupled state of a warning display unit applied to the present disclosure.
FIG. 7 is a configuration diagram of the separated state in FIG. 6.
FIG. 8 is a perspective diagram of a multifunction LED streetlight device considering stability in accordance with another embodiment of the present disclosure.
FIG. 9 is an exploded perspective diagram of FIG. 1.
FIG. 10 is a detailed configuration diagram of the base station device unit in FIG. 8.
FIG. 11 is a configuration diagram of a control unit in accordance with the present disclosure.

### [Best Mode]

Hereinafter, a multifunction LED streetlight device considering stability in accordance with the present disclosure will be described in detail with reference to the accompanying drawings.

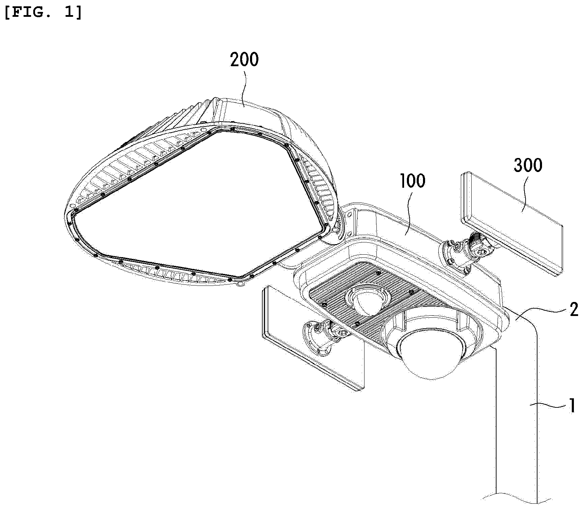

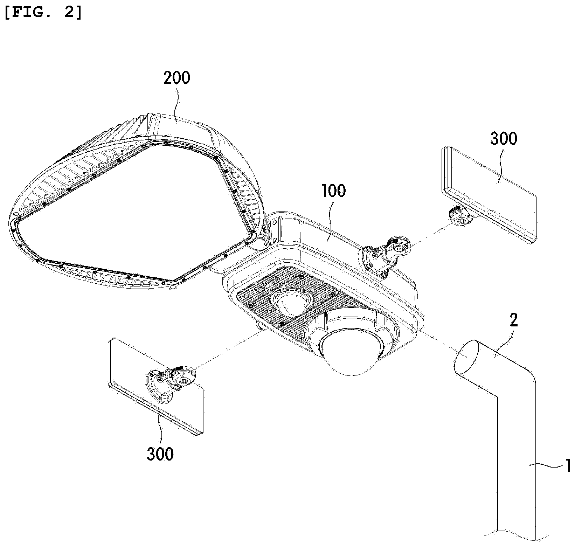

FIG. 1 is a perspective diagram of a multifunction LED streetlight device considering stability in accordance with a preferred embodiment of the present disclosure, and FIG. 2 is an exploded perspective diagram of FIG. 1.

Referring to FIGS. 1 and 2, respectively, the present disclosure is configured to include a base unit 100 connected to an upper end of a pillar 1, and cut and fixedly installed to an arm 2 shorter than the existing length, a lighting unit 200 fixedly installed to the base unit 100 and illuminating a road by adjusting the light distribution, a camera unit 400 coupled to a bottom portion of the base unit 100 to photograph a video at an installed location thereof, and a base station device unit 300 coupled to a side surface of the base unit 100.

Hereinafter, the configuration and operation of the multifunction LED streetlight device considering stability in accordance with the preferred embodiment of the present disclosure configured as described above will be described more in detail.

First, the arm 2 is protruded from the upper end of the pillar 1 of the streetlight toward the road to be illuminated. The arm 2 can be partially cut to have a relatively shorter length without replacing the arm installed to the existing streetlight pillar 1, but if necessary, can replace the existing arm.

The length of the arm 2 is sufficient to stably couple and fix the base unit 100, and the shorter the length of the arm 2, the heavier streetlight device can be stably supported.

In this time, although there is a problem in that it is not easy to illuminate the road surface when the lighting unit 200 is installed to the short arm 2, in the present disclosure, since the road surface can be illuminated by adjusting the light distribution of the lighting unit 200, the installation stability can be improved by shortening the length of the arm 2.

The base unit 100 is coupled to the arm 2, and has a receiving space formed therein to supply power to the lighting unit 200, the camera unit 400, and the base station device unit 300 that will be described later, and in addition, has a communication module, etc. to include a means that can control each unit depending upon the control of a control unit 600 that will be described later.

Meanwhile, the multifunction LED streetlight device in accordance with the present disclosure further includes the control unit 600 communicatively connected to the lighting unit 200 and the camera unit 400 to receive the video photographed by the camera unit 400 to control the lighting unit 200. That is, when the video photographed through the camera unit 400 is received by the control unit 600, the control unit 600 controls an ON/OFF control or a brightness adjustment (dimming) control of the lighting unit 200 based on the video transmitted from the camera unit 400.

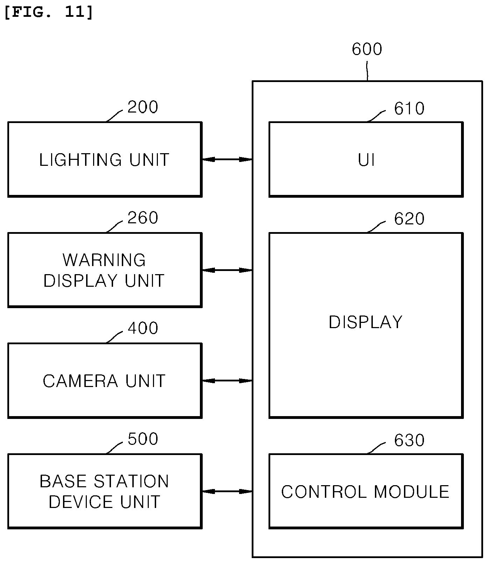

More specifically, referring to FIG. 11, the control unit 600 includes a user interface 610 having buttons or icons related to an ON/OFF or a brightness level (DIM LEVEL) of the lighting unit 200, a display 620 for displaying the video transmitted from the camera unit 400, and a control module 630 for transmitting a control signal for the lighting unit 200 to the lighting unit 200 based on the transmitted video.

Accordingly, when the video transmitted from the camera unit 400 is displayed on the display 620 in the form of a camera preview video, a user operates the button or the icon to turn on/off the lighting, or inputs a control signal that sequentially increases a dimming value from 0% to 100% by 10% and adjusts the brightness at 0∼10 levels, and the control signal is transmitted to the lighting unit 200 through the control module 630. For example, when the current traffic situation is checked through the camera preview video and the situation such as over-speed or reckless driving, etc. occurs, the brightness of the lighting can be controlled to increase.

The weight of the camera unit 400 described above hinders the installation stability of the streetlight device, but in the present disclosure, it is possible to shorten the length of the arm 2 because the light distribution of the lighting unit 200 is adjusted to illuminate the road surface, thus improving the installation stability.

Meanwhile, when the base unit 100 is coupled to the arm 2, a means for connecting a power line provided through the inside of the pillar 1 of the streetlight can be required, and in addition, a means for adjusting the angle of installation state of the base unit 100 can be required.

Preferably, it is possible to integrate the means for adjusting the angle of installation state of the base unit 100 and the means for connecting the power line, thus saving a space and reducing the installation cost.

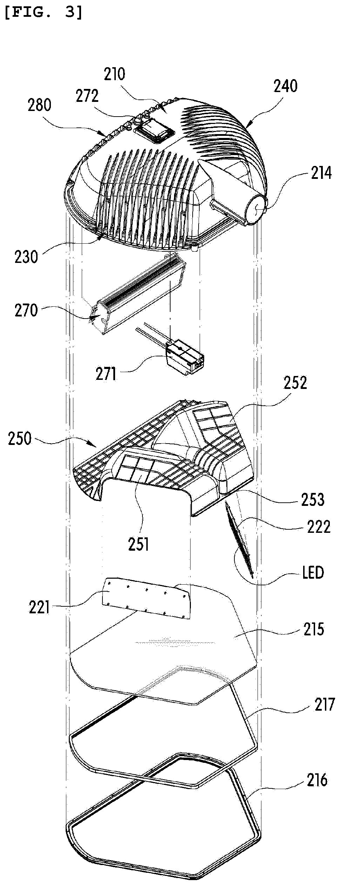

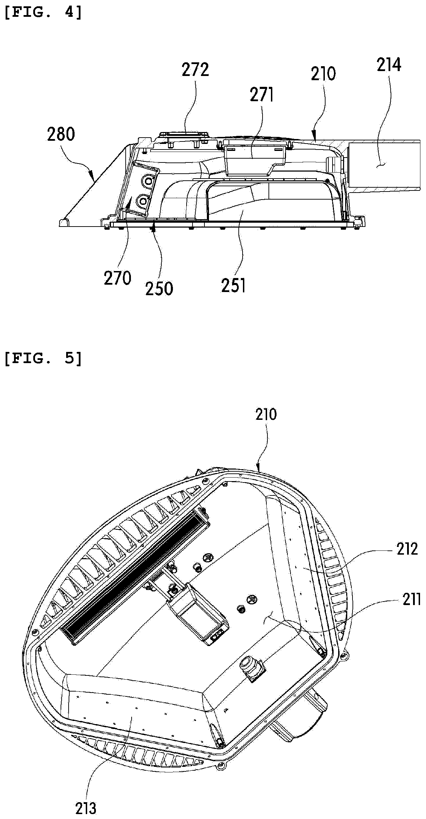

FIG. 3 is an exploded perspective diagram of the lighting unit 200, FIG. 4 is a cross-sectional configuration diagram of the coupled state in FIG. 3, and FIG. 5 is a detailed perspective diagram of the case part in FIG. 3.

Referring to FIGS. 3 to 5, respectively, the lighting unit 200 has a receiving space provided therein, a light outlet 211 provided on one surface thereof, and is configured to include a case part 210 for providing a pair of seating surfaces 212, 213 spaced apart from each other in the receiving space, substrates 221, 222 for mounting a plurality of LEDs, respectively and seating them in the seating surfaces 212, 213 of the case part 210, respectively, heat-dissipating parts 230, 240 provided outside the case part 210 at the locations forming the seating surfaces 212, 213, respectively, and a reflection part 250 inserted into the case part 210 to reflect the light emitted from the substrates 221, 222 to emit it through the light outlet 211.

A reference numeral 215 refers to a cover for covering the light outlet 211, a reference numeral 216 to a frame for fixing the cover 215 to the light outlet 211 side, and a reference numeral 217 to a packing.

The case part 210 is integrally formed and for convenience of explanation, the heat-dissipation parts 230, 240 are described as an independent configuration from the case part 210, but the heat-dissipation parts 230, 240 are integrally formed with the case part 210.

The specific shape of the case part 210 can be changed and has the light outlet 211 formed on one side thereof, and can be independently used for a structure of forming a predetermined space on the upper side thereof based on the light outlet 211.

In addition, a connection part 214 for connecting with the base unit 100 is protruded and provided on the side surface of the case part 210.

The pair of seating parts 212, 213 are provided inside the case part 210 at the side surface of the connection part 214. The seating parts 212, 213 serve to securely fix the substrates 221, 222, respectively, and as described above, the heat-dissipation parts 230, 240 are provided on the outside of the case part 210 corresponding to the location of the seating parts 212, 213 inside the case part 210, respectively.

As described above, the reason that forms the plurality of seating parts 212, 213 is because the heat emitted from the dense LEDs is high and the efficiency dissipated by the heat in a single heat-dissipation part is low when the LEDs are densely formed on one substrate in order to implement a high-output light source.

In the present disclosure, the LEDs for forming the plurality of seating parts 212, 213 to implement a high output are dispersedly mounted on the two substrates 221, 222, and the heat-dissipation parts 230, 240 for individually heat-dissipating each of the substrates 221, 222 are provided, thus enhancing the heat-dissipation efficiency. As a result, it is possible to easily emit the heat, thus preventing the lifetime of the LED from being shortened.

In this time, in order to use the light emitted from the LED as the lighting, the light emitted through the light outlet 211 has to be adjusted by the light distribution suitable for the use of the lighting unit. Particularly, as described above, since the lighting unit 200 is fastened to the base unit 100 fixed to the arm 2 having a very short length, the distance from the road that is a lighting object is further increased and thereby the light distribution that can compensate it is required.

For this purpose, the light emitted from the LEDs mounted on the substrates 221, 222 that are fixedly seated in the two seating parts 212, 213 located at the separated locations is reflected by the reflection part 250 to be emitted by a suitable light distribution through the light outlet 211. Herein, the suitable light distribution means the light distribution that is limited by the regulations, etc. and is suitable for the streetlight. That is, in the streetlight, it means the light distribution depending upon the regulations on the illuminance of the road surface and the irradiation range (area) of the light.

The reflection part 250 has a single plate-like structure, and is provided with curved reflection parts 251, 252 that can reflect the light emitted from the substrates 221, 222, respectively; and a division part 253 for dividing so that the light reflected by each of the curved reflection parts 251, 252 cannot be entered into the opposite side thereof is provided between the curved reflection parts 251, 252.

Specifically, the curved reflection parts 251, 252 can be classified into a first curved reflection part 251 and a second curved reflection part 252 in order to reflect the light emitted from the substrates 221, 222, respectively, and the division part 253 is interposed between the first curved reflection part 251 and the second curved reflection part 252 to divide so that the light reflected by the first curved reflection part 251 cannot be entered into the second curved reflection part 252. Herein, it is preferable to be formed to extend downward to have a predetermined width to divide the first curved reflection part 251 and the second curved reflection part 252 into the left and right.

Particularly, according to the installation structure of the streetlight device in accordance with the present disclosure, it is only necessary to adjust the light distribution of the lighting unit 200 in order to obtain the effect of shortening the length of the arm 2, and in the process of adjusting the light distribution, in order to smoothly illuminate the road surface without causing interference between the light emitted from the substrates 221, 222 and reflected, it is necessary to individually reflect the light emitted from the substrates 221, 222 and reflected through the different curved reflection parts 251, 252, respectively. The object thereof can be achieved through the division part 253 interposed between the first curved reflection part 251 and the second curved reflection part 252.

Herein, the curved reflection parts 251, 252 provides a light reflection space that is an upwardly convex space with respect to the light outlet 211, respectively, and the light distribution of the light emitted from the LEDs can be adjusted depending upon the curvature or the size of the curved reflection parts 251, 252.

That is, the light distribution required for the streetlight can be satisfied even in the configuration of the present disclosure that designs the reflection part 250 when the case part 210 and the output specifications of the LED are determined and locates it relatively farther from the road than the conventional one. Accordingly, although the specific configuration of the reflection part 250 can be changed by other elements for determining the light distribution, it can be a consistent configuration in that the number of the curved reflection parts 251, 252 is inevitably equal to the number of the substrates 221, 222, and the division part 253 is inevitably interposed between the reflection space defined by each of the curved reflection parts 251, 252.

Meanwhile, the division part 253 and the curved reflection parts 251, 252 are a plate-like structure of a metal material, and by thus forming the curved reflection parts 251, 252 in a plate-like structure, it is possible to prevent the increase in the weight thereof and providing various light distribution patterns without changing the shape of the cover 215 of the case part 210.

Specifically, the curved reflection parts 251, 252 can be a combination of planes having different inclined angle or a curved surface, which can be appropriately combined depending upon the shape of the light distribution pattern to be formed. This is because the light distribution pattern required when the streetlight device of the present disclosure is used as a streetlight and the light distribution pattern required when used as a security light, respectively can be different from each other, and by applying different shapes of the curved reflection parts 251, 252 in the same structure to perform any light distribution, it is possible to provide the light distribution pattern that matches the purpose of use of various types of lighting devices.

In addition, although not illustrated in the drawing, when the light outlet 211 for emitting the light reflected by the reflection part 250 is not located parallel to the ground, the light distribution can be made so that the light emitted from the substrates 221, 222 is reflected by the curved reflection parts 251, 252 toward the ground. As a result, there is an advantage in that various light distribution patterns can be formed depending upon the angle made by the light outlet and the ground and the shape (curvature) of the curved reflection part.

Meanwhile, the power supplied to the substrates 221, 222 is a DC constant power due to the characteristics of the LED, and a power supply part 270, which can convert an AC power into the DC constant power and supply it when the AC power is supplied from the outside, is provided, and the power supply part 270 is provided to be in contact with the inside of the case part 210 for heat-dissipation.

In addition, a heat-dissipation part 280 for dissipating heat is provided outside the installation surface of the power supply part 270 of the case part 210. The power supply part 270 is fixed to the inside of the case part 210, and is located on an upper portion of the location where the curved reflection parts 251, 252 of the reflection part 250 are not formed.

The heat-dissipation part 280 dissipates the heat of the power supply part 270 to the outside, and can be integrally provided to the case part 210 in the same shape as the heat-dissipation parts 230, 240.

The three heat-dissipation parts 230, 240, 280 can be located at the farthest location from each other in the planar structure of the case part 210, respectively. This arrangement can further enhance the heat-dissipation efficiency.

The heat-dissipation parts 230, 240, 280 can be all the same structure; and in explaining the configuration of one heat-dissipation part 230 as an example, a plurality of heat-dissipation pins 231 are protruded in the direction perpendicular to the case part 210, and the bottom sides thereof have a structure that is connected to each other by one support part 232.

This is a shape in which the heat-dissipation pins 231 are firmly supported by the support part 232, and a configuration that the convection circulation of the heat can occur due to the convection characteristic of the upward movement of the heated air upon heat generation, thus easily performing the heat-dissipation.

Then, an illuminance sensor part 272 can be provided to control the power of the power supply part 270 supplied to the substrates 221, 222 depending upon the external illuminance to adjust the illuminance, and to perform various controls while communicating with the outside using a communication part 271.

As described above, the present disclosure can adjust the light distribution even while using the arm 2 having a short length, thus satisfying the light distribution characteristic of the streetlight illuminating the road.

In the above description, although a specific configuration of the lighting unit 200 has been described as an example, the present disclosure is not limited to the specific configuration of the lighting unit 200, and can be all used for a structure that can satisfy the light distribution characteristic of the streetlight even when the light distribution is adjusted to be coupled to the short arm 2.

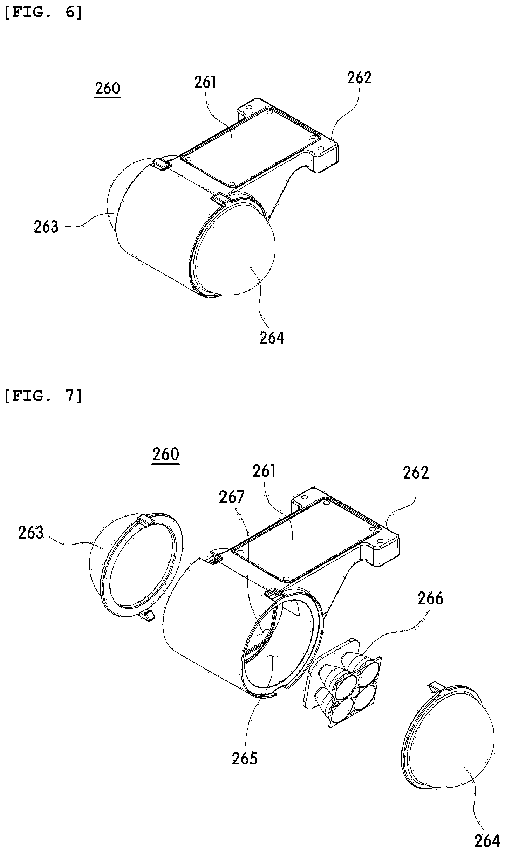

FIG. 6 is a perspective diagram of a warning display unit 260 additionally installed on the lighting unit 200 to perform display in an emergency, and FIG. 7 is an exploded perspective diagram of FIG. 6.

Referring to FIGS. 6 and 7, respectively, the warning display unit 260 has two receiving parts 265 having the light outlets at left and right sides thereof with respect to a partition wall 267, and is configured to include a body 261 extended in one direction between the receiving parts to include a coupling part 262 coupled to the case part 210 of the lighting unit 200, a light module 266 inserted into the receiving part 265, which is opposite to the traveling direction in the installation state, of the receiving parts of the body 261, and covers 263, 264 covering the light outlet of the receiving part 265, respectively.

Such a configuration can constitute the receiving part 265 at both sides considering a country in which the traveling direction of the vehicle differs from that of a normal country, such as Japan or the United Kingdom, such that the light module 266 can be selectively mounted in the receiving part 265 when exported to the corresponding country.

Since the light outlet faces the opposite side of the traveling direction, that is, the vehicle behind, the warning display unit 260 can be excellent in visibility, and can reduce the power consumption compared to the conventional method of blinking or lighting the streetlight.

The warning display unit 260 is blinked by an external control to display that an accident has occurred in front of the traveling direction, such that drivers can perform caution driving to prevent the occurrence of a secondary accident.

Herein, the control unit 600 controls to turn on or off the warning display unit 260.

The control unit 600 is communicatively connected with the warning display unit 260 and the camera unit 400 to receive a video photographed by the camera unit 400 to control the warning display unit 260. That is, when the video photographed through the camera unit 400 is received by the control unit 600, the control unit 600 controls an ON/OFF control or a blinking control of the warning display unit 260 based on the video transmitted from the camera unit 400.

More specifically, referring to FIG. 11, the control unit 600 includes a user interface 610 having buttons or icons related to an ON/OFF or blinking function of the warning display unit 260, the display 620 for displaying the video transmitted from the camera unit 400, and a control module 630 for transmitting a control signal for the warning display unit 260 to the warning display unit 260 based on the transmitted video.

Accordingly, when the video transmitted from the camera unit 400 is displayed on the display 620 in the form of a camera preview video, the user operates the button or the icon to input a control signal so that the warning display unit 260 is turned on, off, or blinked, and the control signal is transmitted to the warning display unit 260 through the control module 630. For example, it is possible to check the current traffic situation through the camera preview video, and to control so that the warning display unit 260 is blinked when an accident occurs in the front of the traveling direction.

Meanwhile, the camera unit 400 can be mounted on the bottom surface of the base unit 100, and the camera unit 400 can be selectively coupled without installing to the base unit 100 coupled to the arms 2 of all pillars 1 to monitor the check of traffic situation, over-speed prevention, reckless driving, tailgating at the intersection, etc. if necessary.

That is, all base units 100 are provided with a coupling means for mounting the camera unit 400, and the camera unit 400 can be mounted on the coupling means if necessary.

In addition, the base station device unit 300 is coupled to the side surface of the base unit 100 if necessary. The base unit 100 is provided with a means to which the base station device unit 300 can be coupled as in the case that the means for coupling the camera unit 400 is provided as described above, and the base station device unit 300 is selectively coupled thereto if necessary.

This is because the minimum installation distance between the base station device units 300 and the minimum installation distance between the streetlight pillars are determined.

As described above, the present disclosure can perform a stable installation using the arm 2 having a short length even if the weight increases by the use of the base station device unit 300, the camera unit 400, the lighting unit 200, and the base unit 100, thus using the existing pillar 1 and the existing arm 2 as they are.

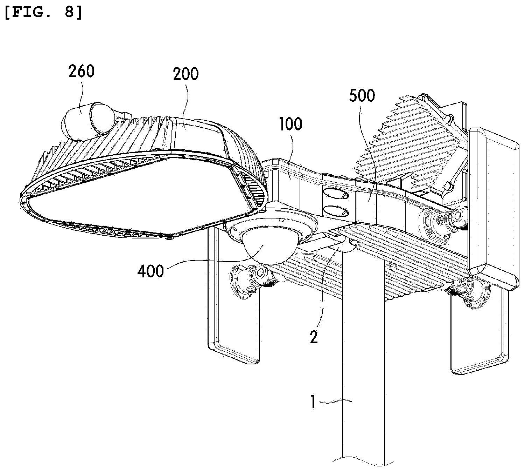

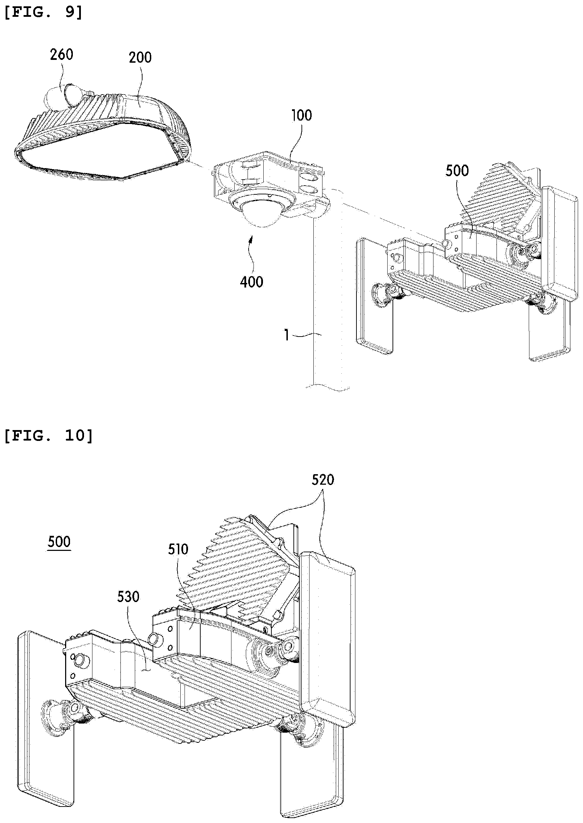

FIG. 8 is a perspective diagram of a multifunction LED streetlight device considering stability in accordance with another embodiment of the present disclosure, and FIG. 9 is an exploded perspective diagram of FIG. 8.

Referring to FIGS. 8 and 9, respectively, the multifunction LED streetlight device considering stability in accordance with the preferred embodiment of the present disclosure is configured to include the base unit 100 connected to the upper end of the pillar 1 and cut and fixedly installed to the arm 2 shorter than the conventional length, the lighting unit 200 fixedly installed to the base unit 100 to illuminate the road by adjusting the light distribution, the camera unit 400 coupled to the bottom portion of the base unit 100 to photograph a video at the installation location, and a base station device unit 500 coupled to the rear end of the base unit 100, having an installation groove provided from the center of the coupling surface thereof to be fixed in the state where the upper end of the pillar 1 is inserted into the central portion thereof.

Hereinafter, the configuration and operation of the multifunction LED streetlight device considering stability configured as described above in accordance with another embodiment of the present disclosure will be described more in detail.

First, the arm 2 is protruded from the upper end of the pillar 1 of the streetlight toward the road to be illuminated. The arm 2 can be partially cut to have a relatively shorter length, or replace the existing arm if necessary without replacing the arm installed to the existing streetlight pillar 1.

The length of the arm 2 is sufficient to stably couple and fix the base unit 100, the shorter the length of the arm 2, the heavier the streetlight device can be stably supported.

In this time, although there is a problem in that it is not easy to illuminate the road surface when the lighting unit 200 is installed to the short arm 2, in the present disclosure, since the road surface can be illuminated by adjusting the light distribution of the lighting unit 200, the installation stability can be improved by shortening the length of the arm 2.

The base unit 100 is coupled to the arm 2, and has a receiving space formed therein to supply power to the lighting unit 200, the camera unit 400, and the base station device unit 500 which are described in detail later, and in addition, has a communication module, etc. to include a means that can control each unit depending upon the external control.

Specifically, a control can be performed such as transmitting the video photographed through the camera unit 400 or receiving an external control signal to turn on/off the lighting unit 200.

In addition, when coupling the base unit 100 to the arm 2, a means for connecting a power line provided through the inside of the pillar 1 of the streetlight can be required, and in addition, a means for adjusting the angle of the installation state of the base unit 100 can be required.

Preferably, the means for adjusting the angle of the installation state of the base unit 100 and the means for connecting the power line are integrally formed to save a space and reduce the installation cost.

FIG. 10 is a detailed configuration diagram of the base station device unit 500.

Referring to FIG. 10, the base station device unit 500 can include a housing 510 for receiving circuits necessary for a base station, and a plurality of antennas 520. The housing 510 has a coupling means directly coupled to the rear end of the base unit 100, and in this time, can be also configured to be connected to a power source along with the above coupling.

The housing 510 is provided with an installation groove 530 having a predetermined length from the center of the coupled surface with the base unit 100 in order not to interfere with the pillar 1 when coupled to the base unit 100.

The base station device unit 500 can be coupled by the installation groove 530 at the installation direction side of the pillar 1 that is the rear end side of the base unit 100 coupled to the arm 2.

The antennas 520 are exposed through the other side surfaces of the housing 510 where the installation groove 530 is not formed, and can be also located on the upper portion of the housing 510 if necessary.

In explaining more in detail the configuration of the base station device unit 500 as described above, the LED streetlight device of the present disclosure is a multifunction streetlight device including the lighting unit 200, the camera unit 400, and a base station device unit 500 in combination, and as a result, the weight thereof is inevitably large compared to the existing streetlight device. Particularly, when the base unit 100 is fixed to the arm 2, since the lighting unit 200, the camera unit 400, and the base station device unit 500 are all coupled to the base unit 100, it is necessary to design so that the load applied to the base unit 100 is distributed with respect to the center of the pillar 1.

For this purpose, the lighting unit 200 is installed to the front of the base unit 100, the camera unit 400 is coupled to the bottom portion of the base unit 100, and the base station device unit 500 is installed to the rear of the base unit 100, such that the entire center of gravity of the streetlight device is distributed with respect to the center of the pillar 1. Particularly, in order to prevent the unbalance of the overall load of the streetlight device due to the increase in the load due to the addition of the base station device unit 500, the pillar 1 is inserted into the installation groove 530 provided in the housing 510 of the base station device unit 500, and then the base station device unit 500 is coupled to the side surface of the base unit 100.

According to the configuration, the entire load of the LED streetlight device of the present disclosure is dispersed with respect to the center of the pillar 1 in a state where the base station device unit 500 is coupled to the base unit 100.

This is because the coupling locations of the lighting unit 200, the camera unit 400, and the base station device unit 500 with which the base unit 100 is coupled are appropriately designed, and coupled as the state where the pillar 1 is inserted into the installation groove 530 provided in the housing 510.

As described above, by distributing the load by additionally installing the base station device unit 500 around the pillar 1, it is possible to have a more stable installation state.

In addition, since the pillar 1 can be installed without replacing or deforming it, the cost can be reduced and the installation work can be facilitated.

In order to further improve the stability of the installation state of the present disclosure including the base station device unit 500, the installation groove 530 provided in the housing 510 of the base station device unit 500 is not completely opened up and down, and can be deformed as a structure that contacts the upper end of the pillar 1.

That is, in the configuration of FIG. 10, by integrally forming the structure that covers the upside of the installation groove 530 to contact the end of the pillar 1, it is possible to concentrate the load of the base station device unit 300 on the upper portion of the pillar 1, thus improving the installation stability.

As a result, the present disclosure can install without replacing the existing streetlight pillar and the existing arm even when the weight of the lighting itself increases, and it is possible to selectively couple and use a camera and a mobile communication base station if necessary.

It will be apparent to those skilled in the art to which the present disclosure pertains that the present disclosure is not limited to the embodiment, and various changes or deformations can be made without departing from the spirit the present disclosure.

According to the present disclosure, it is possible to manufacture the multifunction LED streetlight device, which can adjust the light distribution of the lighting unit to install while using a part of the arm installed to the existing streetlight as it is without replacing the arm even when the weight of the luminaire increases, thus saving the cost and performing more stable installation.

## Claims

1. A multifunction LED streetlight device considering installation stability, comprising:
a base unit fixedly installed to an arm coupled to an upper end of a pillar; and
a lighting unit detachably coupled to the base unit, and for adjusting light distribution in order to provide legal light distribution on a road even when the arm is provided by the length required for the coupling with the base unit.

2. The multifunction LED streetlight device considering installation stability of claim 1,
wherein a means to which a camera unit can be coupled is provided on the bottom surface of the base unit, and a means to which a base station device unit can be coupled is provided on the rear surface of the base unit.

3. The multifunction LED streetlight device considering installation stability of claim 2,
wherein the base station device unit comprises
a housing for receiving circuits required for an operation of a base station; and
a plurality of antennas protruded from the housing.

4. The multifunction LED streetlight device considering installation stability of claim 3,
wherein the housing further comprises an installation groove vertically penetrated in order not to interfere the pillar when connected to the rear end of the base unit.

5. The multifunction LED streetlight device considering installation stability of claim 4, further comprising a structure for covering the upper portion of the installation groove, and contacting the upper end of the pillar.

6. The multifunction LED streetlight device considering installation stability of claim 1,
wherein the base unit is connected with a power line provided through the inside of the pillar to supply a power to units coupled to the base unit, and
wherein the base unit is coupled by a coupling means in order to be rotatably coupled to the arm, and the coupling means provides a connection space that can connect the power line provided through the inside of the pillar.

7. The multifunction LED streetlight device considering installation stability of claim 1,
wherein the lighting unit comprises
a case part for forming a light outlet and having a plurality of seating surfaces on a part of the inner surface thereof;
a plurality of substrates seated in the plurality of seating surfaces, respectively, and mounting a plurality of LEDs, respectively;
a plurality of heat-dissipation parts provided on the outer surface of the case part that is the outside portion corresponding to the seating surface located on the inner surface of the case part to dissipate heat of the plurality of substrates, respectively; and
a reflection part inserted and installed into the case part to reflect light emitted from the LED mounted on the plurality of substrates to emit it through the light outlet, and for providing light distribution suitable for the lighting of the road even when coupled to the arm.

8. The multifunction LED streetlight device considering installation stability of claim 7,
wherein the reflection part comprises a plurality of curved reflection parts for providing a convex curve surface on the upside of the light outlet, reflecting the light from the plurality of LEDs on each of the plurality of curved reflection parts, and providing the light distribution by a curvature of the curved reflection part.

9. The multifunction LED streetlight device considering installation stability of claim 8,
wherein the plurality of curved reflection parts comprise a first curved reflection part and a second curved reflection part for reflecting the LED light of the substrate in order to be located to correspond to the plurality of substrates, respectively, and
wherein the reflection part further comprises a division part interposed between the first curved reflection part and the second curved reflection part to divide so that the light reflected from the first curved reflection part is not entered to the second curved reflection part.

10. The multifunction LED streetlight device considering installation stability of claim 2, further comprising
a warning display unit additionally installed to the lighting unit to emit the light toward the opposite to the traveling direction of a vehicle; and
a control unit communicatively connected with the lighting unit, the warning display unit, and the camera unit to receive the video photographed by the camera unit, and for controlling the lighting unit and the warning display unit.
